# EUROPEAN PATENT APPLICATION

(11) **EP 4 708 582 A1**
(43) Date of publication of application: **11.03.2026**
(21) Application number: 24802900.1
(22) Date of filing: 30.04.2024
(51) Int. Cl.: H01R 13/11

(54) **CONNECTION BASE, CONNECTION PLUG, CONNECTOR, SEAT AND VEHICLE**

(30) Priority: 05.05.2023 CN 202321058422 U
(71) Applicant: Shenzhen Yinwang Intelligent Technologies Co., Ltd., Shenzhen, Guangdong 518110 (CN)
(72) Inventor: ZHANG, Shihao, Shenzhen, Guangdong 518129 (CN); CAO, Xiaowen, Shenzhen, Guangdong 518129 (CN); ZHU, Ying, Shenzhen, Guangdong 518129 (CN)
(74) Representative: MERH-IP Matias Erny Reichl Hoffmann Patentanwälte PartG mbB
(86) International application number: PCT/CN2024/091062
(87) International publication number: WO 2024/230618

(57) **Abstract**

Embodiments of this application relate to the field of connector technologies and disclose a connector receptacle, a connector plug, a connector, a seat, and a vehicle, to resolve a technical problem that conductive spring plates of an existing connector occupy excessive space. The connector receptacle includes a connector receptacle body and a conductive member, where a first jack is disposed in the connector receptacle body, and the first jack has a first hole wall; the conductive member is located in the first jack, and is connected to the first hole wall; and the conductive member has at least two first contact portions, and the first contact portions protrude in a direction away from the first hole wall. When the connector plug that matches the connector receptacle is inserted into the first jack, a side that is of the connector plug and that is close to the conductive member abuts against the at least two first contact portions of the conductive member, so that the connector plug is installed in the first jack, and there is no need to dispose, in the connector receptacle, a plurality of groups of conductive spring plates for clamping the connector plug on a plurality of sides around the connector plug. This saves internal space of the connector receptacle.

## Description

This application claims priority to Chinese Patent Application No. 202321058422.5, filed with the China National Intellectual Property Administration on May 5, 2023, and entitled "CONNECTOR RECEPTACLE, CONNECTOR PLUG, CONNECTOR, SEAT, AND VEHICLE", which is incorporated herein by reference in its entirety.

### TECHNICAL FIELD

This application relates to the field of connector technologies, and in particular, to a connector receptacle, a connector plug, a connector, a seat, and a vehicle.

### BACKGROUND

Currently, two groups of conductive spring plates are usually disposed in a jack of a connector. When a plug of the connector is connected to the jack, the two groups of conductive spring plates clamp the plug and are electrically connected to the plug, so that two ends of the connector are connected. However, the conductive spring plates occupy excessive space in the jack of the connector. As a result, the connector cannot be used in a narrow space scenario. For example, the vehicle-mounted product industry has a strict requirement on space of a connector.

### SUMMARY

Embodiments of this application provide a connector receptacle, a connector plug, a connector, a seat, and a vehicle, to resolve a technical problem that conductive spring plates of an existing connector occupy excessive space.

To achieve the foregoing objective, this application uses the following technical solutions.

According to a first aspect of embodiments of this application, a connector receptacle is provided. The connector receptacle includes a connector receptacle body and a conductive member, where a first jack is disposed in the connector receptacle body, and the first jack has a first hole wall; the conductive member is located in the first jack, and is connected to the first hole wall; and the conductive member has at least two first contact portions, and the first contact portions protrude in a direction away from the first hole wall.

It can be learned from the foregoing that the first jack is disposed in the connector receptacle body of the connector receptacle, the conductive member of the connector receptacle is disposed on the first hole wall, and the at least two first contact portions of the conductive member protrude in the direction away from the first hole wall. In this case, when the connector plug that matches the connector receptacle is inserted into the first jack, a side that is of the connector plug and that is close to the conductive member abuts against the at least two first contact portions of the conductive member, so that the connector plug is installed in the first jack, and there is no need to dispose, in the connector receptacle, a plurality of groups of conductive spring plates for clamping the connector plug on a plurality of sides around the connector plug. This saves internal space of the connector receptacle.

In addition, the connector plug installed in the first jack abuts against the at least two first contact portions of the conductive member. This electrically connects the connector plug to the conductive member, for voltage or signal transmission. Further, the connector plug abuts against each of at least two first contact portions of the same conductive member, to implement a function of multi-point contact between the connector plug and the conductive member. In a vehicle-mounted vibration operating condition, when being detached from one of the first contact portions, the connector plug still maintains a state of abutting against and being electrically connected to another first contact portion. This improves reliability of connecting the connector plug to the connector receptacle.

In some implementations, the connector receptacle includes at least two conductive members, the at least two conductive members include a first conductive member and a second conductive member that are spaced apart, and the first conductive member and the second conductive member are insulated from each other. In this way, when the connector plug that matches the connector receptacle is inserted into the first jack, the connector plug abuts against, on two sides, each of at least two first contact portions of the first conductive member and each of the at least two first contact portions of the second conductive member. When the first conductive member and the second conductive member are insulated from each other, the connector plug installed in the first jack is electrically connected to the at least two first contact portions of the first conductive member and the at least two first contact portions of the second conductive member. This can transmit two different voltages or signals between the connector plug and the connector receptacle.

In some implementations, the at least two first contact portions include a first upper contact portion and a first lower contact portion; and in an extension direction of the first jack, the first upper contact portion and the first lower contact portion are spaced apart, the first upper contact portion is closer to an opening of the first jack than the first lower contact portion, and a bulging height of the first upper contact portion is less than a bulging height of the first lower contact portion. In this way, when the connector plug is connected to the connector receptacle, the side that is of the connector plug and that is close to the conductive member abuts against both the first upper contact portion and the first lower contact portion that are spaced apart, so that the connector plug has support of at least two points in the extension direction of the first jack, and the connector plug is not easy to shake in the first jack. This ensures connection stability.

In addition, when the connector plug is inserted into the connector receptacle, the connector plug first contacts the first upper contact portion. In this case, the first upper contact portion drives the first lower contact portion to move in a direction close to the first hole wall. When the connector plug continues to be inserted into the connector receptacle, a surface of the connector plug still contacts the first lower contact portion because the bulging height of the first upper contact portion is less than the bulging height of the first lower contact portion. This ensures connection reliability.

In some implementations, the at least two first contact portions further include a first middle contact portion located between the first upper contact portion and the first lower contact portion; and bulging heights of the first upper contact portion, first middle contact portion, and first lower contact portion are sequentially increased in the extension direction of the first jack. In this way, the first middle contact portion is disposed, to increase a quantity of contact points between the connector plug and the conductive member, and increase contact forces and contact points between the connector plug and the conductive member.

In some implementations, the conductive member is a first metal spring plate, and the first metal spring plate includes a first upper flat portion, at least two first bulging portions, and a first lower flat portion that are sequentially connected; and at least one of the first upper flat portion and the first lower flat portion is connected to the first hole wall, and the first bulging portions bulge in the direction away from the first hole wall to form the first contact portions. The first metal spring plate has an elastic force. When the connector plug is inserted into the connector receptacle, the connector plug is installed in the first jack of the connector receptacle under the action of the elastic force of the first metal spring plate.

In some implementations, a first installation groove is disposed in the first hole wall, the first upper flat portion and the first lower flat portion are located in the first installation groove, and at least a part of the first bulging portion extends out of the first installation groove; and the first upper flat portion is close to the opening of the first jack and is connected to the first installation groove, and the first lower flat portion is away from the opening of the first jack and is a free end. The first installation groove is disposed in the first hole wall, so that the first upper flat portion and the first lower flat portion that are of the conductive member are disposed in the first installation groove, and a surface of the conductive member is flush with a surface of the first hole wall. This avoids a problem of connector plug damage caused by protrusion of the surface of the conductive member from the surface of the first hole wall.

In addition, the first upper flat portion is connected to the first installation groove, and the first lower flat portion is a free end. When being inserted into the connector receptacle, the connector plug first touches the first upper flat portion, and then touches the first lower flat portion. The conductive member gradually approaches the first hole wall as an insertion depth of the connector plug increases, so that the first metal spring plate is not deformed.

In some implementations, a part that is of the first hole wall and that is connected to the conductive member is a plane. The part that is of the first hole wall and that is connected to the conductive member being disposed as the plane can prevent rotation of the connector plug in the first jack, and improve reliability of connecting the connector plug to the connector receptacle in the vibration operating condition.

In some implementations, a cross section of the first jack is waist-shaped, rectangular, or D-shaped, and the cross section is perpendicular to the extension direction of the first jack. At least one side of each of these cross section shapes is a straight side, so that at least one surface of the first hole wall of the connector receptacle is a plane. This can prevent rotation of the connector plug relative to the first jack.

In some implementations, the at least two first contact portions include a first upper contact portion and a first lower contact portion; and in a circumferential direction of the first jack, the first upper contact portion and the first lower contact portion are spaced apart, the first upper contact portion and the first lower contact portion are at a same distance from the opening of the first jack, and a bulging height of the first upper contact portion is the same as a bulging height of the first lower contact portion. In this way, when the connector plug is connected to the connector receptacle, the side that is of the connector plug and that is close to the conductive member also abuts against both the first upper contact portion and the first lower contact portion that are spaced apart.

In some implementations, the at least two first contact portions further include a first middle contact portion located between the first upper contact portion and the first lower contact portion; and bulging heights of the first upper contact portion, first middle contact portion, and first lower contact portion are the same in the circumferential direction of the first jack. Likewise, the first middle contact portion is disposed, to increase a quantity of contact points between the connector plug and the conductive member, and increase contact forces and contact points between the connector plug and the conductive member.

In some implementations, the conductive member includes a substrate and at least two spring plates connected to the substrate. The at least two spring plates are disposed side by side in the circumferential direction of the first jack. The at least two spring plates each have one end connected to the substrate, while the other end of each of the spring plates is a free end, and the spring plates are bulged in a direction away from the substrate to form the first contact portions. The at least two spring plates are disposed side by side in the circumferential direction of the first jack, so that a plurality of first contact portions are disposed side by side in the circumferential direction of the first jack. When the connector plug is inserted into the connector receptacle, the connector plug also abuts against and is electrically connected to the connector receptacle under elastic forces of the spring plates.

According to a second aspect of embodiments of this application, a connector is provided. The connector includes a connector plug and the connector receptacle in any one of the foregoing embodiments. The connector plug is inserted into the connector receptacle and is located in the first jack, and the connector plug abuts against and is electrically connected to the at least two first contact portions of the conductive member of the connector receptacle. In this way, the connector receptacle in the connector has same technical effect as the connector receptacle in any one of the first aspect and the possible implementations of the first aspect. Details are not described herein again.

In some implementations, the connector plug includes a connector plug body and a conductive portion, where the conductive portion is disposed on the connector plug body and is connected to the connector plug body; and a surface that is of the conductive portion and that is away from the connector plug body abuts against and is electrically connected to the at least two first contact portions, and the surface that is of the conductive portion and that is away from the connector plug body is a plane. In this way, when the connector plug is inserted into the connector receptacle, the conductive portion on one side of the connector plug body abuts against the at least two first contact portions of the conductive member of the connector receptacle, so that the connector plug is installed in the connector receptacle, and there is no need to dispose, in the connector receptacle, a plurality of groups of conductive spring plates for clamping the connector plug on a plurality of sides around the connector plug. This saves internal space of the connector receptacle.

In addition, the conductive portion on one side of the connector plug body is electrically connected to the at least two first contact portions of the conductive member in the connector receptacle. In one aspect, a voltage or signal can be transmitted between the conductive member of the connector receptacle and the conductive portion of the connector plug. In another aspect, the conductive portion abuts against each of the at least two first contact portions of the same conductive member, to implement a function of multi-point contact between the conductive portion and the conductive member. In a vehicle-mounted vibration operating condition, when being detached from one of the first contact portions, the conductive portion still maintains a state of abutting against and being electrically connected to another first contact portion. This improves reliability of connecting to the connector.

In some implementations, the connector receptacle includes the at least two conductive members, and the at least two conductive members include the first conductive member and the second conductive member that are insulated from each other; the connector plug includes at least two conductive portions, and the at least two conductive portions include a first conductive portion and a second conductive portion that are insulated from each other; and the first conductive portion abuts against and is electrically connected to at least two first contact portions of the first conductive member, and the second conductive portion abuts against and is electrically connected to at least two first contact portions of the second conductive member.

In this way, when the connector plug is inserted into the connector receptacle, the first conductive portion on one side of the connector plug abuts against the at least two first contact portions of the first conductive member in the connector receptacle, and the second conductive portion on the other side of the connector plug abuts against the at least two first contact portions of the second conductive member in the connector receptacle. This ensures stability of connecting to the connector plug. In addition, when the first conductive member, the second conductive member, the first conductive portion, and the second conductive portion are insulated from each other, the first conductive member is electrically connected to at least two first contact portions of the first conductive portion, and the second conductive member is electrically connected to at least two first contact portions of the second conductive portion. This can also transmit two different voltages or signals between the connector plug and the connector receptacle.

In some implementations, the first conductive portion and the second conductive portion are metal conductive plates, two first connection grooves that are isolated from each other are disposed on the connector plug body, and the first conductive portion and the second conductive portion are respectively installed in the two first connection grooves. The first connection grooves are disposed on the connector plug body, so that the first conductive portion and the second conductive portion can be disposed in the first connection grooves, and a surface of the conductive portion is flush with a surface of the connector plug body. This avoids a problem of connector plug damage caused by protrusion of the surface of the conductive portion from the surface of the connector plug body.

In some implementations, the connector plug further includes a support; and the support is connected to the connector plug, and the support is located on a side that is of the connector plug and that is away from the conductive member in the connector receptacle. The support is disposed on one side of the connector plug, to help improve rigidity of the connector plug, effectively support the connector plug, and prevent deformation of the connector plug in a process of inserting the connector plug into the connector receptacle from affecting connection reliability.

According to a third aspect of embodiments of this application, a connector plug is provided. The connector plug includes a connector plug body and a conductive portion, where the conductive portion is disposed on the connector plug body and is connected to the connector plug body; and the conductive portion has at least two second contact portions, and the second contact portions protrude in a direction away from the connector plug body.

Likewise, the conductive portion having the second contact portions is disposed on the connector plug. When the connector plug is inserted into the connector receptacle that matches the connector plug, the at least two second contact portions of the conductive portion also abut against one side of the connector receptacle, so that the connector plug is installed in the connector receptacle, and there is no need to dispose, in the connector receptacle, a plurality of groups of conductive spring plates for clamping the connector plug on a plurality of sides around the connector plug. This saves internal space of the connector receptacle.

In addition, the at least two second contact portions of the conductive portion abut against the connector receptacle. This can also electrically connect the connector plug to the connector receptacle, for voltage or signal transmission. Further, each of the at least two second contact portions of the same conductive portion of the connector plug abuts against the connector receptacle, to implement a function of multi-point contact between the connector plug and the connector receptacle, and improve reliability of connecting the connector plug to the connector receptacle.

In some implementations, the connector plug includes at least two conductive portions, the at least two conductive portions include a first conductive portion and a second conductive portion that are spaced apart, and the first conductive portion and the second conductive portion are insulated from each other. In this way, when the connector plug is inserted into the connector receptacle that matches the connector plug, each of at least two second contact portions of the first conductive portion and each of at least two second contact portions of the second conductive portion on two sides of the connector plug abut against the connector receptacle. When the first conductive portion and the second conductive portion are insulated from each other, the connector plug is electrically connected to the connector receptacle via the at least two second contact portions of the first conductive portion and the at least two second contact portions of the second conductive portion. This can also transmit two different voltages or signals between the connector plug and the connector receptacle.

In some implementations, the at least two second contact portions include a second upper contact portion and a second lower contact portion; and in an insertion direction of the connector plug body, the second upper contact portion and the second lower contact portion are spaced apart, the second upper contact portion is farther away from an end portion of the connector plug body than the second lower contact portion, and a bulging height of the second upper contact portion is greater than a bulging height of the second lower contact portion. In this way, when the connector plug is connected to the connector receptacle, the connector plug abuts against the connector receptacle via each of the second upper contact portion and the second lower contact portion that are spaced apart, so that the connector plug has support of at least two points in the extension direction, and the connector plug is not easy to shake in the connector receptacle. This ensures connection stability.

In some implementations, the at least two second contact portions further include a second middle contact portion located between the second upper contact portion and the second lower contact portion; and bulging heights of the second upper contact portion, second middle contact portion, and second lower contact portion are sequentially decreased in the insertion direction of the connector plug body. In this way, the second middle contact portion is disposed, to increase a quantity of contact points between the connector receptacle and the conductive portion, and increase contact forces and contact points between the connector receptacle and the conductive portion.

In some implementations, the conductive portion is a second metal spring plate, and the second metal spring plate includes a second upper flat portion, at least two second bulging portions, and a second lower flat portion that are sequentially connected; and at least one of the second upper flat portion and the second lower flat portion is connected to the connector plug body, and the second bulging portions bulge in the direction away from the connector plug body to form the second contact portions. The second metal spring plate has an elastic force. When the connector plug is inserted into the connector receptacle, the connector plug is installed in the connector receptacle under the action of the elastic force of the second metal spring plate.

In some implementations, a second installation groove is disposed on the connector plug body, the second upper flat portion and the second lower flat portion are located in the second installation groove, and at least a part of the second bulging portion extends out of the second installation groove; and the second upper flat portion is far away from the end portion of the connector plug body and is a free end, and the second lower flat portion is close to the end portion of the connector plug body and is connected to the second installation groove. The second installation groove is disposed on the connector plug body, so that the second upper flat portion and the second lower flat portion that are of the conductive portion can be disposed in second installation groove, and a surface of the conductive portion is flush with a surface of the connector plug body. This avoids a problem of connector plug damage caused by protrusion of the surface of the conductive portion from the surface of the connector plug body.

In some implementations, a part that is of the connector plug body and that is connected to the conductive portion is a plane. The part that is of the connector plug body and that is connected to the conductive portion being disposed as the plane can prevent rotation of the connector plug in the connector receptacle, and improve reliability of connecting the connector plug to the connector receptacle in a vibration operating condition.

In some implementations, a cross section of the connector plug body is waist-shaped, rectangular, or D-shaped, and the cross section is perpendicular to the insertion direction of the connector plug body. At least one side of each of these cross section shapes is a straight side, so that at least one surface of the connector plug body is a plane. This can prevent rotation of the connector plug relative to the connector receptacle.

In some implementations, the at least two second contact portions include a second upper contact portion and a second lower contact portion; and the second upper contact portion and the second lower contact portion are spaced apart in a circumferential direction of the connector plug body, the second upper contact portion and the second lower contact portion are at a same distance from an end portion of the connector plug body, and a bulging height of the second upper contact portion is the same as a bulging height of the second lower contact portion. In this way, when the connector plug is connected to the connector receptacle, the connector receptacle also abuts against each of the second upper contact portion and the second lower contact portion that are spaced apart.

In some implementations, the at least two second contact portions further include a second middle contact portion located between the second upper contact portion and the second lower contact portion; and bulging heights of the second upper contact portion, second middle contact portion, and second lower contact portion are the same in the circumferential direction of the connector plug body. Likewise, the second middle contact portion is disposed, to increase a quantity of contact points between the connector receptacle and the conductive portion, and increase contact forces and contact points between the connector receptacle and the conductive portion.

According to a fourth aspect of embodiments of this application, a connector is provided. The connector includes a connector receptacle and the connector plug in any one of the foregoing embodiments; and the connector plug is inserted into the connector receptacle and is located in the connector receptacle, and the connector receptacle abuts against and is electrically connected to the at least two second contact portions of the conductive portion of the connector plug. In this way, the connector plug in the connector has same technical effect as the connector plug in any one of the first aspect and the possible implementations of the first aspect. Details are not described herein again.

In some implementations, the connector receptacle includes a connector receptacle body and a conductive member, where a second jack is disposed in the connector receptacle body, and the second jack has a second hole wall; the conductive member is located in the second jack and is connected to the second hole wall; and a surface that is of the conductive member and that is away from the second hole wall abuts against and is electrically connected to the at least two second contact portions, and the surface that is of the conductive member and that is away from the second hole wall is a plane. Similar to the foregoing embodiment, the conductive member in the second hole wall of the connector receptacle abuts against the at least two second contact portions of the conductive portion of the connector plug, so that the connector plug is installed in the connector receptacle, and there is no need to dispose, in the connector receptacle, a plurality of groups of conductive spring plates for clamping the connector plug on a plurality of sides around the connector plug. This saves internal space of the connector receptacle.

In addition, the conductive member on the second hole wall of the connector receptacle is electrically connected to the at least two second contact portions of the conductive portion of the connector plug. In one aspect, a voltage or signal can be transmitted between the conductive member of the connector receptacle and the conductive portion of the connector plug. In another aspect, the conductive member abuts against each of the at least two second contact portions of the same conductive portion, to implement a function of multi-point contact between the conductive portion and the conductive member, and improve reliability of connecting to the connector.

In some implementations, the connector plug includes the at least two conductive portions, and the at least two conductive portions include the first conductive portion and the second conductive portion that are insulated from each other; the connector receptacle includes at least two conductive members, and the at least two conductive members include a first conductive member and the second conductive member that are insulated from each other; and the first conductive member abuts against and is electrically connected to at least two second contact portions of the first conductive portion, and the second conductive member abuts against and is electrically connected to at least two second contact portions of the second conductive portion.

Similar to the foregoing embodiment, when the connector plug is inserted into the connector receptacle, the at least two second contact portions of the first conductive portion on one side of the connector plug abut against the first conductive member in the connector receptacle, and the at least two second contact portions of the second conductive portion on the other side of the connector plug abut against the second conductive member in the connector receptacle, to ensure stability of connecting to the connector plug. In addition, when the first conductive member, the second conductive member, the first conductive portion, and the second conductive portion are insulated from each other, the first conductive member is electrically connected to at least two second contact portions of the first conductive portion, and the second conductive member is electrically connected to at least two second contact portions of the second conductive portion. This can transmit two different voltages or signals between the connector plug and the connector receptacle.

In some implementations, the first conductive member and the second conductive member are metal conductive plates, two second connection grooves that are isolated from each other are disposed on the second hole wall, and the first conductive member and the second conductive member are respectively installed in the two second connection grooves. The second connection grooves are disposed on the second hole wall, so that the first conductive member and the second conductive member can be disposed in the second connection grooves, and a surface of the conductive member is flush with a surface of the second hole wall. This avoids a problem of connector plug damage caused by protrusion of the surface of the conductive member from the surface of the second hole wall.

According to a fifth aspect of embodiments of this application, a connector is provided. The connector includes the connector receptacle in any one of the foregoing embodiments and the connector plug in any one of the foregoing embodiments, where the connector receptacle includes the conductive member disposed in the connector receptacle, the conductive member has the at least two first contact portions, and the first contact portions protrude in the direction away from the first hole wall; the connector plug includes the conductive portion disposed on the connector plug, the conductive portion has the at least two second contact portions, and the second contact portions protrude in the direction away from the connector plug body; and the connector plug is inserted into the connector receptacle, the conductive member abuts against and is electrically connected to the at least two second contact portions of the conductive portion, and the conductive portion abuts against and is electrically connected to the at least two first contact portions of the conductive member. Similar to the foregoing embodiment, the first contact portions may be disposed on the conductive member of the connector receptacle, and the second contact portions may be disposed on the conductive portion of the connector plug. When the connector plug is inserted into the connector receptacle, the conductive member and the conductive portion abut against each other, and a voltage or signal can be transmitted.

According to a sixth aspect of embodiments of this application, a seat is provided. The seat includes a backrest, a headrest, and the connector in any one of the foregoing embodiments, where the backrest has installation holes, and the connector receptacle of the connector is installed in the installation holes and is connected to the backrest; the headrest includes insertion rods, and the connector plug of the connector is connected to the insertion rods; and the headrest is inserted into the backrest via the insertion rods. In this way, the connector in any one of the foregoing embodiments can be used in the headrest and the backrest of the vehicle-mounted seat. The insertion rods of the headrest are inserted into the installation holes of the backrest, to implement an electrical connection between the connector plug and the connector receptacle, implement a function of voltage or signal transmission, and help implement intelligence of the vehicle-mounted seat.

In some implementations, the headrest further includes a conducting wire, and the conducting wire is installed in the insertion rod; and an end of the conducting wire is electrically connected to the conductive portion of the connector plug on the insertion rod. In this way, the conducting wire in the insertion rod is electrically connected to the connector plug, to implement the function of voltage or signal transmission.

In some implementations, the connector plug includes the first conductive portion and the second conductive portion that are insulated from each other, and the first conductive portion and the second conductive portion are spaced apart and connected on an outer side wall of the insertion rod; and the conducting wire includes a first conducting wire and a second conducting wire, the first conducting wire and the second conducting wire are installed in the insertion rods, the first conducting wire is electrically connected to the first conductive portion, and the second conducting wire is electrically connected to the second conductive portion. In this way, different voltages or signals can be transmitted through the first conducting wire and the second conducting wire respectively in the insertion rod.

According to a seventh aspect of embodiments of this application, a vehicle is provided. The vehicle includes a vehicle body and at least one seat in any one of the foregoing embodiments, where the seat is disposed in the vehicle body. In this way, the seat has same technical effect as the seat in the sixth aspect. Details are not described herein again.

### BRIEF DESCRIPTION OF DRAWINGS

FIG. 1 is a diagram of a structure of a vehicle according to an embodiment of this application;
FIG. 2 is a diagram of a structure of a seat according to an embodiment of this application;
FIG. 3A is a diagram of an M-M cross-sectional structure of a connection between a guide sleeve and an insertion rod in FIG. 2;
FIG. 3B is a diagram of another cross-sectional structure of the connection between the guide sleeve and the insertion rod in FIG. 2;
FIG. 4A is a diagram of an A-A cross-sectional structure of the connection between the guide sleeve and the insertion rod in FIG. 3A;
FIG. 4B is a diagram of a structure of a connector receptacle in FIG. 4A;
FIG. 4C is a diagram 1 of a cross-sectional structure of a connector according to an embodiment of this application;
FIG. 4D is a diagram of a structure of a connector plug in FIG. 4C;
FIG. 4E is a diagram 2 of a cross-sectional structure of a connector according to an embodiment of this application;
FIG. 4F is a diagram of a structure of a connector used in a vehicle-mounted speaker according to an embodiment of this application;
FIG. 5 is a diagram of a structure of an implementation of a first conductive member in FIG. 4A;
FIG. 6 is a diagram 3 of a cross-sectional structure of a connector according to an embodiment of this application;
FIG. 7A is a diagram 4 of a cross-sectional structure of a connector according to an embodiment of this application;
FIG. 7B is a diagram 5 of a cross-sectional structure of a connector according to an embodiment of this application;
FIG. 8A is a diagram of a structure of an existing connector;
FIG. 8B is a diagram of another structure of an existing connector;
FIG. 9A is a diagram of another M-M cross-sectional structure of the connection between the guide sleeve and the insertion rod in FIG. 2;
FIG. 9B is a diagram of a B-B cross-sectional structure in FIG. 9A;
FIG. 10 is a diagram of a structure of an implementation of a conductive member in FIG. 9B;
FIG. 11 is a diagram of another structure of a connector used in a vehicle-mounted speaker according to an embodiment of this application;
FIG. 12 is a diagram of a control interface of a vehicle according to an embodiment of this application; and
FIG. 13 is a diagram of a structure of a connector plug according to an embodiment of this application.

### DESCRIPTION OF EMBODIMENTS

To make objectives, technical solutions, and advantages of this application clearer, the following further describes this application in detail with reference to accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, position terms such as "upper", and "lower" are defined relative to an illustrative position of a component in the accompanying drawings. It should be understood that these direction terms are relative concepts and are used for relative description and clarification, and may vary accordingly depending on a position change in which components are placed in the accompanying drawings.

Embodiments of this application provide a vehicle 01. The vehicle 01 may be a sedan, an off-road vehicle, a truck, a bus, or the like. In addition, the vehicle may be a fuel-powered vehicle, a hybrid electric vehicle, a pure electric vehicle, or the like. A vehicle model and power mode of the vehicle 01 are not specifically limited in this application.

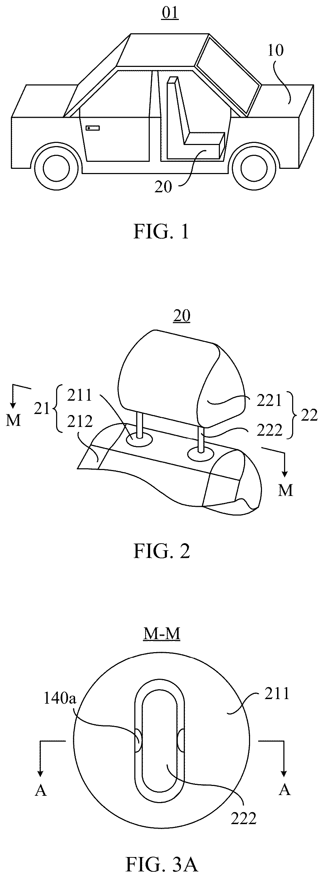

As shown in FIG. 1, the vehicle 01 may include a vehicle body 10 and a seat 20 installed in the vehicle body 10. A plurality of seats 20 may be installed in the vehicle body 10. A quantity of seats 20 installed in the vehicle body 10 is not specifically limited in this application. The seat 20 may be used as a carrier of a vehicle-mounted functional device. For example, the vehicle-mounted functional device may include functions such as a vehicle-mounted speaker, seat massage, and seat heating. These functions need to be implemented through harnesses to transmit voltages or electrical signals, so that the seat 20 executes corresponding instructions based on the voltages or the signals.

Based on this, embodiments of this application provide the seat 20. As shown in FIG. 2, the seat 20 may include a backrest 21 and a headrest 22. The backrest 21 may include guide sleeves 211 and a backrest body 212. Installation holes (not shown in the figure) may be disposed on the backrest body 212, and the guide sleeves 211 may be installed in the installation holes and connected to the backrest body 212. The headrest 22 may include a headrest body 221 and insertion rods 222 that are connected. The insertion rod 222 may be a hollow tubular structure. The insertion rods 222 may be inserted into the guide sleeves 211, so that the headrest 22 is connected to the backrest 21.

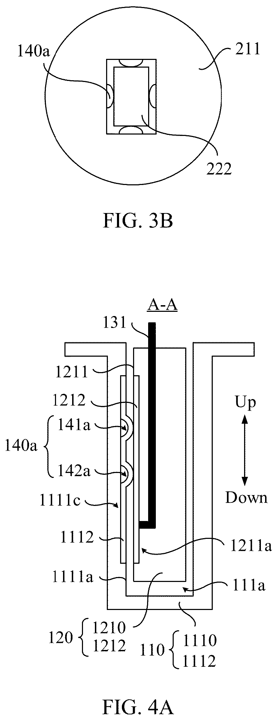

In some implementations, as shown in FIG. 3A, a cross section of a connection portion of the guide sleeve 211 and the insertion rod 222 may be set to be waist-shaped, and the cross section is perpendicular to a length direction of the guide sleeve 211 and a length direction of the insertion rod 222. As shown in FIG. 3B, the cross section of the connection portion of the guide sleeve 211 and the insertion rod 222 may alternatively be set to be rectangular. Certainly, the cross section of the connection portion of the guide sleeve 211 and the cross section of the insertion rod 222 may alternatively be set to be square, circular, oval, D-shaped, or the like, to avoid relative rotation between the guide sleeve 211 and the insertion rod 222. A specific cross section shape of the connection portion of the guide sleeve 211 and the insertion rod 222 is not specifically limited in this application.

For example, the insertion rod 222 may be set as a hollow rod structure. In this way, a conducting wire may be disposed in the insertion rod 222, and the guide sleeves 211 and the insertion rods 222 are used as a connector. When the guide sleeves 211 and the insertion rods 222 are inserted into each other, the connector implements an electrical connection, so that two ends of the conducting wire are connected, and the conducting wire can be used to transmit a voltage or an electrical signal of a vehicle-mounted function. This implements vehicle-mounted functions such as a vehicle-mounted speaker, seat massage, and seat heating.

To implement a vehicle-mounted function of the seat 20, embodiments of this application provide a connector 100. As shown in FIG. 4A, the connector 100 may include a connector receptacle 110 and a connector plug 120. The guide sleeves 211 (shown in FIG. 3A and FIG. 3B) may be used as the connector receptacle 110, and the insertion rods 222 (shown in FIG. 3A and FIG. 3B) may be used as the connector plug 120. The headrest 22 may further include a first conducting wire 131 inserted into the insertion rod 222 and configured to perform voltage or electrical signal transmission.

In some implementations, as shown in FIG. 4A, the connector receptacle 110 may include a connector receptacle body 1110 and a first conductive member 1112. The connector receptacle body 1110 has a first jack 111a, and the connector plug 120 may be inserted into the first jack 111a to connect to the connector receptacle 110. The connector receptacle body 1110 may include a first hole wall 1111a, and the first conductive member 1112 may be installed on the first hole wall 1111a. The first hole wall 1111a and the first conductive member 1112 may be of planar structures. This facilitates processing and manufacturing. Certainly, the first hole wall 1111a and the first conductive member 1112 may alternatively be of curved structures. Shapes of the first hole wall 1111a and the first conductive member 1112 are not specifically limited in this application.

In the accompanying drawings of embodiments of this application, hollow components such as grooves and holes are marked by using guide lines with arrows, and other components are marked by using guide lines without arrows.

In addition, as shown in FIG. 4A, the connector plug 120 may include a connector plug body 1210 and a first conductive portion 1212. The connector plug body 1210 may include a first outer side wall 1211, and the first conductive portion 1212 may be installed on the first outer side wall 1211. The first outer side wall 1211 is disposed opposite to the first hole wall 1111a, and the first conductive portion 1212 is disposed opposite to the first conductive member 1112. An end that is of the first conducting wire 131 and that is in the connector plug 120 may be electrically connected to the first conductive portion 1212. The first outer side wall 1211 and the first conductive portion 1212 may be of planar structures or curved structures. Shapes of the first outer side wall 1211 and the first conductive portion 1212 are not specifically limited in this application.

In some embodiments of this application, as shown in FIG. 4A, a first connection groove 1211a may be disposed in the first outer side wall 1211 of the connector plug 120, and the first conductive portion 1212 is installed in the first connection groove 1211a in a manner like welding, screwing, or riveting. In addition, a first installation groove 1111c may be disposed in the first hole wall 1111a of the connector receptacle 110, and the first conductive member 1112 is installed in the first installation groove 1111c in a manner like welding, screwing, or riveting. A connection manner is not particularly limited in embodiments of this application. The first connection groove 1211a is disposed, so that a surface of the first conductive portion 1212 is flush with a surface of the first outer side wall 1211. The first installation groove 1111c is disposed, so that a surface of the first conductive member 1112 is flush with a surface of the first hole wall 1111a. This can prevent deformation and damage of the first conductive member 1112 and the first conductive portion 1212 in an insertion process, and improve connection reliability.

Based on this, two first contact portions 140a, namely, a first upper contact portion 141a and a first lower contact portion 142a, are disposed on the first conductive member 1112 in an up-down direction in FIG. 4A, namely, an extension direction of the first jack 111a. The first contact portions 140a protrude in a direction away from the first hole wall 1111a. When the connector plug 120 is inserted into the first jack 111a, the two first contact portions 140a of the first conductive member 1112 are electrically connected to the first conductive portion 1212 on a single side of the connector 100, so that the first conducting wire 131 is conducted.

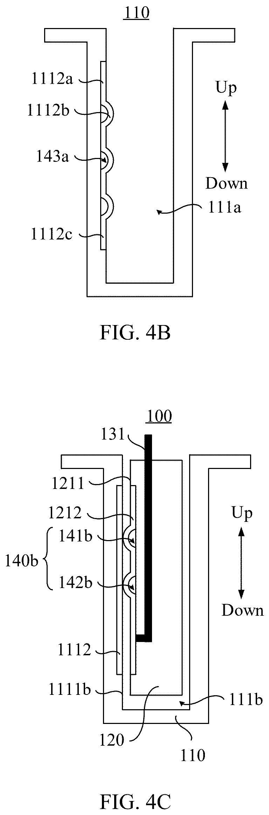

As shown in FIG. 4B, from top to bottom (an opening end of the first jack 111a is on the top, and the same applies below), the first conductive member 1112 (shown in FIG. 4A) may include a first upper flat portion 1112a, first bulging portions 1112b, and a first lower flat portion 1112c that are sequentially connected. The first bulging portions 1112b bulge in the direction away from the first hole wall 1111a to form the first contact portions 140a (shown in FIG. 4A). The first contact portions 140a may further include a first middle contact portion 143a located between the first upper contact portion 141a and the first lower contact portion 142a. There may be one or more first middle contact portions 143a. A quantity of first middle contact portions 143a is not specifically limited in this application.

The first middle contact portion 143a is disposed, to increase a quantity of abutting points between the first conductive member 1112 and the first conductive portion 1212. In a vehicle-mounted vibration operating condition, after one of the first contact portions 140a is detached from the first conductive portion 1212, the first conductive portion 1212 can still be electrically connected to the first conductive member 1112 via another first contact portion 140a including the first middle contact portion 143a. This improves reliability of connecting the connector receptacle 110 to the connector plug 120.

In conclusion, the first jack 111a is disposed in the connector receptacle body 1110 of the connector receptacle 110, and the first conductive member 1112 of the connector receptacle 110 is disposed on the first hole wall 1111a. The two first contact portions 140a of the first conductive member 1112 protrude in the direction away from the first hole wall 1111a. In this case, when the connector plug 120 is inserted into the first jack 111a, a side that is of the connector plug 120 and that is close to the first conductive member 1112 abuts against the two first contact portions 140a of the first conductive member 1112, so that the connector plug 120 is installed in the first jack 111a, and there is no need to dispose, in the connector receptacle 110, a plurality of groups of conductive spring plates for clamping the connector plug 120 on a plurality of sides around the connector plug. This can save internal space of the connector receptacle 110.

That the connector plug 120 is installed in the connector receptacle 110 means that after the connector plug 120 is inserted into the connector receptacle 110, the connector plug 120 can maintain a fixed position relative to the connector receptacle 110. When an external force is applied to the connector plug 120 to remove the connector plug 120, the connector plug 120 may be detached from the connector receptacle 110.

In addition, the connector plug 120 installed in the first jack 111a abuts against the two first contact portions 140a of the first conductive member 1112. This electrically connects the connector plug 120 to the first conductive member 1112, for voltage or signal transmission. Further, the connector plug 120 abuts against each of the two first contact portions 140a of the same first conductive member 1112, to implement a function of multi-point contact between the connector plug 120 and the first conductive member 1112. In the vehicle-mounted vibration operating condition, when being detached from one of the first contact portions 140a, the connector plug 120 still maintains a state of abutting against and being electrically connected to another first contact portion 140a. This improves reliability of connecting the connector plug 120 to the connector receptacle 110.

In some other implementations, as shown in FIG. 4C, different from that in the foregoing embodiment, the conductive portion of the connector plug 120 may be disposed as a structure having contact portions. Specifically, the connector receptacle 110 has a second jack 111b, and the connector receptacle 110 may include a second hole wall 1111b and the first conductive member 1112. The first conductive member 1112 may be installed on the second hole wall 1111b.

As shown in FIG. 4C, the connector plug 120 may include the first outer side wall 1211 and the first conductive portion 1212, and the first conductive portion 1212 may be installed on the first outer side wall 1211. The first outer side wall 1211 is disposed opposite to the second hole wall 1111b, and the first conductive portion 1212 is disposed opposite to the first conductive member 1112. An end that is of the first conducting wire 131 and that is in the connector plug 120 may be electrically connected to the first conductive portion 1212.

Based on this, two second contact portions 140b, namely, a second upper contact portion 141b and a second lower contact portion 142b, are disposed on the first conductive portion 1212 in an up-down direction in FIG. 4C, namely, an extension direction of the second jack 111b. Each second contact portion 140b protrudes in a direction away from the second hole wall 1111b. When the connector plug 120 is inserted into the second jack 111b, the first conductive member 1112 is electrically connected to the first conductive portion 1212 on a single side of the connector 100 via the two second contact portions 140b, so that the first conducting wire 131 is conducted.

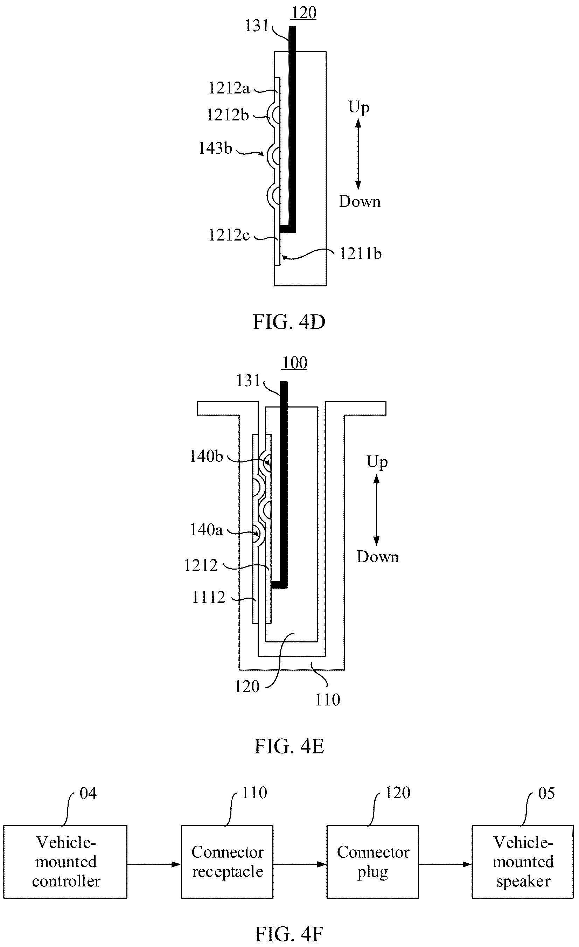

As shown in FIG. 4D, from top to bottom, the first conductive portion 1212 (shown in FIG. 4C) may include a second upper flat portion 1212a, second bulging portions 1212b, and a second lower flat portion 1212c that are sequentially connected. The second bulging portions 1212b bulge in a direction away from the first outer side wall 1211 to form the second contact portions 140b (shown in FIG. 4C). The second contact portions 140b may further include a second middle contact portion 143b located between the second upper contact portion 141b and the second lower contact portion 142b. There may be one or more second middle contact portions 143b. A quantity of second middle contact portions 143b is not specifically limited in this application.

In some embodiments of this application, as shown in FIG. 4D, a second connection groove 1211b may be disposed in the first outer side wall 1211 (shown in FIG. 4C), and the second upper flat portion 1212a and the second lower flat portion 1212c are installed in the second connection groove 1211b in a manner like welding, screwing, or riveting. A connection manner is not specifically limited in this embodiment of this application. At least a part of the second bulging portion 1212b extends out of the second connection groove 1211b.

In more implementations, as shown in FIG. 4E, different from that in the foregoing embodiment, the first conductive member 1112 of the connector receptacle 110 may be disposed as a structure having the first contact portions 140a, and the first conductive portion 1212 of the connector plug 120 is disposed as a structure having the second contact portions 140b. When the connector plug 120 is inserted into the connector receptacle 110, the first conductive member 1112 abuts against and is electrically connected to two second contact portions 140b of the first conductive portion 1212, and the first conductive portion 1212 abuts against and is electrically connected to two first contact portions 140a of the first conductive member 1112.

It can be learned from the foregoing that when the connector plug 120 is inserted into the connector receptacle 110, the conductive portion of the connector plug 120 abuts against the at least two contact portions of the conductive member of the connector receptacle 110, so that the connector plug 120 is installed in the connector receptacle 110, and there is no need to dispose, in the connector receptacle 110, a plurality of groups of conductive spring plates for clamping the connector plug 120 on a plurality of sides around the connector plug. This saves internal space of the connector receptacle 110.

In addition, the connector plug 120 abuts against the two contact portions of the conductive member. This electrically connects the conductive portion to the conductive member, for voltage or signal transmission. For example, a voltage or signal for vehicle-mounted functions such as a vehicle-mounted speaker, seat massage, and seat heating is transmitted. In addition, the connector plug 120 abuts against the two contact portions of the same conductive member, to implement the function of multi-point contact between the conductive portion and the conductive member. In the vehicle-mounted vibration operating condition, when being detached from one of the contact portions, the connector plug 120 still maintains a state of abutting against and being electrically connected to another contact portion. This improves reliability of connecting the connector 100.

In this way, the connector 100 provided in embodiments of this application is applied to the vehicle-mounted seat 20. For example, as shown in FIG. 4F, the other end of the first conducting wire 131 may be electrically connected to the vehicle-mounted speaker 05, and the vehicle-mounted speaker 05 may be disposed in the headrest body 221. The first conductive member 1112 on the seat 20 is electrically connected to a vehicle-mounted controller 04, and the vehicle-mounted controller 04 may be disposed in the vehicle body 10. After the headrest 22 is inserted into the guide sleeves 211 via the insertion rods 222, the connector plug 120 is electrically connected to the connector receptacle 110, and the vehicle-mounted controller 04 transmits the signal to the vehicle-mounted speaker 05 via the connector receptacle 110 and the connector plug 120, to implement a function of connecting the vehicle-mounted speaker 05.

Likewise, other vehicle-mounted functions such as seat massage and seat heating can also be implemented. Details are not described herein. In addition, based on different vehicle-mounted functions, the voltage or signal may alternatively be sequentially transmitted by the vehicle-mounted controller 04 to the connector plug 120 and the connector receptacle 110. In embodiments of this application, a sequence of transmitting the voltage or signal between the connector plug 120 and the connector receptacle 110 is not specifically limited.

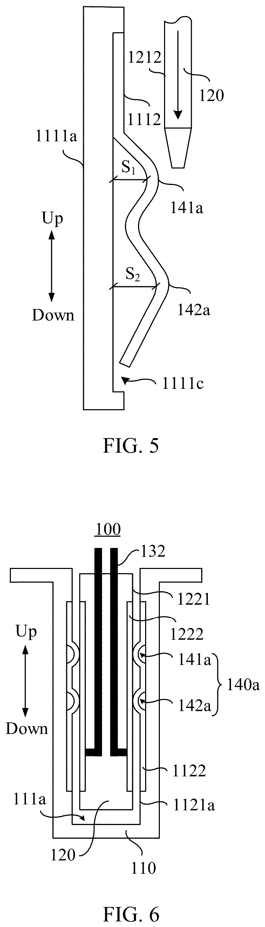

To better connect the connector plug 120 to the connector receptacle 110, for example, as shown in FIG. 5, the first conductive member 1112 may be a first metal spring plate, and an upper end of the first metal spring plate may be connected to the first hole wall 1111a. The connection manner may be a manner like welding, screwing, or riveting. The connection manner is not specifically limited in this application. A lower end of the first metal spring plate may be a free end. The first metal spring plate may be made of a conductive metal like a copper sheet, an iron sheet, or an aluminum sheet. A specific material of the first metal spring plate is not limited in this application.

When the connector plug 120 is inserted downward, the connector plug 120 moves in an inclined direction of the first metal spring plate, and the connector plug 120 is pressed tightly into the connector receptacle 110 under an elastic force of the first metal spring plate, so that the connector plug 120 and the connector receptacle 110 can be better connected. In addition, the first metal spring plate is located in the first installation groove 1111c. This can prevent deformation of the first metal spring plate under an insertion force of the connector plug 120, and improve connection reliability.

In addition, as shown in FIG. 5, at least a part of the first upper contact portion 141a and at least a part of the first lower contact portion 142a extend out of the first installation groove 1111c, and a bulging height S1 of the first upper contact portion 141a is less than a bulging height S2 of the first lower contact portion 142a (that is, S1<S2). The first conductive portion 1212 of the connector plug 120 first contacts the first upper contact portion 141a, and moves toward the first hole wall 1111a; and the first upper contact portion 141a drives the first lower contact portion 142a to move toward the first hole wall 1111a.

Because the bulging height S1 of the first upper contact portion 141a is less than the bulging height S2 of the first lower contact portion 142a, when reaching the first lower contact portion 142a, the first conductive portion 1212 can still keep in contact with the first lower contact portion 142a. This improves reliability of connecting to the connector plug 120. A direction of the bulging height is the direction away from the first hole wall 1111a.

Descriptions are provided above by using examples of disposing the conductive member and the conductive portion on the single side of the connector 100. To better use space saved by the connector 100, more conductive members and conductive portions may be disposed in the connector 100. Descriptions are provided below in detail by using examples of disposing the conductive members and conductive portions on two sides of the connector 100.

In some implementations, as shown in FIG. 6, the headrest 22 (shown in FIG. 2) may further include a second conducting wire 132 inserted into the insertion rod 222. Likewise, the connector receptacle 110 may further include a third hole wall 1121a and a second conductive member 1122, and the second conductive member 1122 may be installed on the third hole wall 1121a. The third hole wall 1121a and the second conductive member 1122 may be of planar structures. This facilitates processing and manufacturing. Certainly, the third hole wall 1121a and the second conductive member 1122 may alternatively be of curved structures. Shapes of the third hole wall 1121a and the second conductive member 1122 are not specifically limited in this application.

In addition, as shown in FIG. 6, the connector plug 120 may further include a second outer side wall 1221 and a second conductive portion 1222, and the second conductive portion 1222 may be installed on the second outer side wall 1221. The second outer side wall 1221 is disposed opposite to the third hole wall 1121a, and the second conductive portion 1222 is disposed opposite to the second conductive member 1122. An end that is of the second conducting wire 132 and that is in the connector plug 120 may be electrically connected to the second conductive portion 1222. The second outer side wall 1221 and the second conductive portion 1222 may be of planar structures or curved structures. Shapes of the second outer side wall 1221 and the second conductive portion 1222 are not specifically limited in this application.

Based on this, two first contact portions 140a, namely, a first upper contact portion 141a and a first lower contact portion 142a, are also disposed on the second conductive member 1122 in an up-down direction in FIG. 6, namely, an extension direction of the first jack 111a. Each first contact portion 140a protrudes in a direction away from the third hole wall 1121a. When the connector plug 120 is inserted into the first jack 111a, the second conductive member 1122 is electrically connected to the second conductive portion 1222 on the another side of the connector 100 via the two first contact portions 140a, so that the second conducting wire 132 is conducted.

The first conductive member 1112 and the second conductive member 1122 may be disposed opposite to each other in the connector receptacle 110, and the first conductive portion 1212 and the second conductive portion 1222 may be disposed opposite to each other on two sides of the connector plug 120. Specific structures of the first conductive member 1112 and the first conductive portion 1212 are the same as the specific structures in the foregoing embodiment. Specific structures of the connector receptacle 110 and the connector plug 120 are also the same as the specific structures in the foregoing embodiment. Details are not described herein again. Certainly, there may alternatively be three, four, or more first contact portions 140a of the second conductive member 1122. A specific quantity of first contact portions 140a of the second conductive member 1122 is not specifically limited in this application.

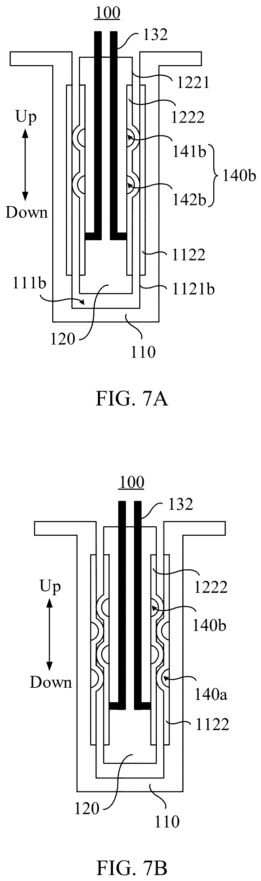

In some other implementations, as shown in FIG. 7A, the conductive portion of the connector plug 120 may also be disposed as a structure having contact portions. Specifically, the connector receptacle 110 has a second jack 111b, and the connector receptacle 110 may include a fourth hole wall 1121b and the second conductive member 1122. The second conductive member 1122 may be installed on the fourth hole wall 1121b.

As shown in FIG. 7A, the connector plug 120 may further include a second outer side wall 1221 and a second conductive portion 1222, and the second conductive portion 1222 may be installed on the second outer side wall 1221. The second outer side wall 1221 is disposed opposite to the fourth hole wall 1121b, and the second conductive portion 1222 is disposed opposite to the second conductive member 1122. An end that is of the second conducting wire 132 and that is in the connector plug 120 may be electrically connected to the second conductive portion 1222.

Based on this, two second contact portions 140b, namely, a second upper contact portion 141b and a second lower contact portion 142b, are disposed on the second conductive portion 1222 in an up-down direction in FIG. 7A, namely, an extension direction of the second jack 111b. Each second contact portion 140b protrudes in a direction away from the fourth hole wall 1121b. When the connector plug 120 is inserted into the second jack 111b, the second conductive member 1122 is electrically connected to the second conductive portion 1222 on the another side of the connector 100 via the two second contact portions 140b, so that the second conducting wire 132 is conducted. A specific structure of the second conductive portion 1222 may be the same as the specific structure in the foregoing embodiment. Details are not described herein again.

In more implementations, as shown in FIG. 7B, different from that in the foregoing embodiment, the second conductive member 1122 of the connector receptacle 110 may be disposed as a structure having the first contact portions 140a, and the second conductive portion 1222 of the connector plug 120 is disposed as a structure having the second contact portions 140b. When the connector plug 120 is inserted into the connector receptacle 110, the second conductive member 1122 abuts against and is electrically connected to two second contact portions 140b of the second conductive portion 1222, and the second conductive portion 1222 abuts against and is electrically connected to two first contact portions 140a of the second conductive member 1122.

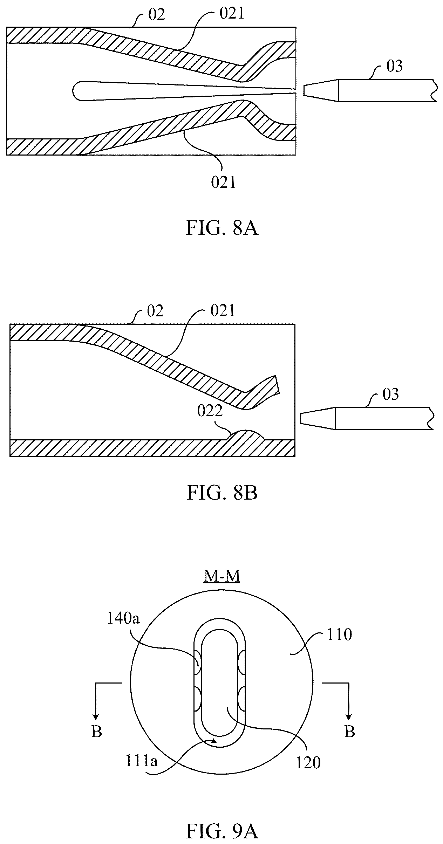

Usually, as shown in FIG. 8A, two latches 021 are disposed opposite to each other in a socket 02 of a connection apparatus. After a plug 03 is connected to the socket 02, the two latches 021 clamp the plug 03 and are electrically connected to two sides of the plug 03, so that a wire is conducted. Certainly, as shown in FIG. 8B, the latch 021 on one side in some sockets 02 may be set to be of a structure form of a bump 022. In such a structure design, one connection apparatus can implement only a function of conducting one wire, and space inside the socket 02 is wasted.

In the connector 100 provided in embodiments of this application, on one side of the connector plug 120, the first conductive portion 1212 is electrically connected to the first conductive member 1112, to implement a function of conducting the first conducting wire 131; and on the other side of the connector plug 120, the second conductive portion 1222 is electrically connected to the second conductive member 1122, to implement a function of conducting the second conducting wire 132. Therefore, when space of the connector receptacle 110 is the same, more wires can be conducted in the connector 100 provided in embodiments of this application.

In addition, in the connector 100 provided in embodiments of this application, the conductive members on the two sides of the connector receptacle 110 each have the two first contact portions 140a, and the conductive portions on the two sides of the connector plug 120 each have the two second contact portions 140b. After the connector plug 120 is connected to the connector receptacle 110, in the up-down direction, the plurality of first contact portions 140a and the connector plug 120 can form multi-point contact, and the plurality of second contact portions 140b and the connector receptacle 110 can form multi-point contact. This can fasten the connector plug 120 in the up-down direction, prevent tilting or shaking of the connector plug 120 in the connector receptacle 110, and improve reliability of the connector 100 in the vibration operating condition.

Certainly, more conductive members may alternatively be disposed on hole walls of the connector receptacle 110 based on different cross section shapes of the connector receptacle 110. Correspondingly, more conductive portions are disposed on an outer side wall of the connector plug 120. In this way, more wires can be conducted in the connector 100. For example, when a cross section of a connection portion of the connector receptacle 110 and the connector plug 120 is rectangle (as shown in FIG. 3B), four groups of first contact portions 140a may be disposed in the connector 100. A specific structural principle is the same as a structural principle of the connector 100 in the foregoing embodiment. Details are not described herein again. A quantity of groups of the conductive members and the conductive portions in the connector 100 is not specifically limited in this application.

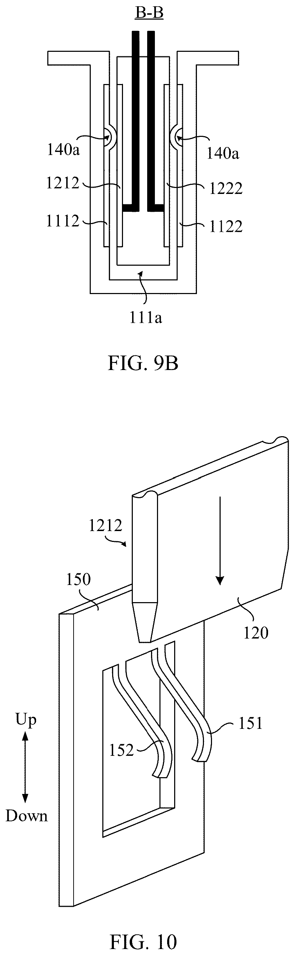

In some implementations, as shown in FIG. 9A, two first contact portions 140a may be disposed side by side in the connector receptacle 110 in the circumferential direction of the first jack 111a. Specifically, as shown in FIG. 9B, the two first contact portions 140a (one of which is shielded by the other) may be disposed on the first conductive member 1112, or may be disposed on the second conductive member 1122. In this way, the first conductive portion 1212 and the first conductive member 1112 can be in multi-point contact, and the second conductive portion 1222 and the second conductive member 1122 can be in multi-point contact. Certainly, there may alternatively be three, four, or more first contact portions 140a. A specific quantity of first contact portions 140a is not specifically limited in embodiments of this application.

As shown in FIG. 10, the conductive member may include the substrate 150, and the first spring plate 151 and the second spring plate 152 that are connected to the substrate 150. The substrate 150 may be a hole wall of the connector receptacle 110, or may be a conductive metal plate connected to the hole wall. This is not specifically limited in this application. Both the first spring plate 151 and the second spring plate 152 protrude on a same side away from the substrate 150, and protruding heights of the first spring plate 151 and the second spring plate 152 are the same.

Based on this, the substrate 150 may be used as both the first conductive member 1112 and the second conductive member 1122. Protruding parts of the first spring plate 151 and the second spring plate 152 may be used as the two first contact portions 140a of the first conductive member 1112. In this way, after the connector plug 120 is inserted into the first jack 111a, the first conductive portion 1212 on one side of the connector plug 120 abuts against and electrically connected to both the first spring plate 151 and the second spring plate 152.

Certainly, the substrate 150, the first spring plate 151, and the second spring plate 152 may also be used as conductive portions of the connector plug 120. A specific structural principle is the same as a structural principle of the connector plug 120 having the second contact portions 140b in the foregoing embodiment. Details are not described herein again. Specific structures of the conductive member and the conductive portion in the connector 100 are not specifically limited in this application.

In addition, as shown in FIG. 10, upper ends (ends close to the opening of the first jack 111a) of the first spring plate 151 and the second spring plate 152 may be connected to the substrate 150, and lower ends (ends away from the opening of the first jack 111a) of the first spring plate 151 and the second spring plate 152 are free ends. When the connector plug 120 is inserted downward into the first jack 111a, the connector plug 120 may move in an inclined direction of the first spring plate 151 and the second spring plate 152. This can also prevent deformation of the first spring plate 151 and the second spring plate 152 under the insertion force of the connector plug 120, and improve connection reliability.

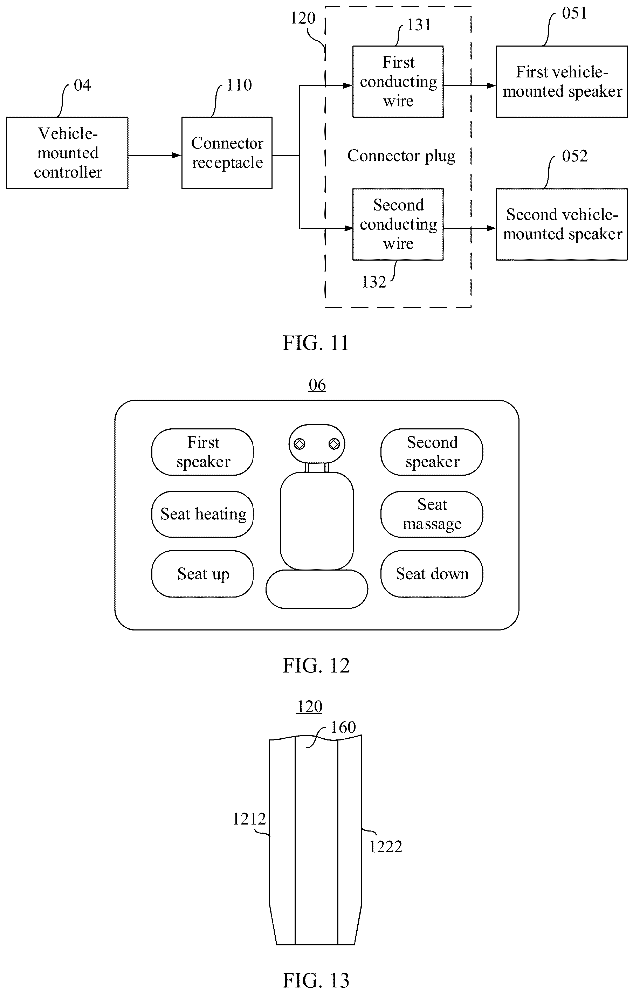

When two conducting wires are disposed in the insertion rods 222 of the seat 20, the headrest body 221 may further include a first vehicle-mounted speaker 051 and a second vehicle-mounted speaker 052. For example, as shown in FIG. 11, the other end of the first conducting wire 131 may be electrically connected to the first vehicle-mounted speaker 051, and the other end of the second conducting wire 132 may be electrically connected to the second vehicle-mounted speaker 052. In this way, the signal can alternatively be transmitted to the two vehicle-mounted speakers by using the vehicle-mounted controller 04, to implement a function of connecting the two vehicle-mounted speakers.

On this basis, more groups of conducting wires may be disposed between the guide sleeves 211 and the insertion rods 222, to implement other vehicle-mounted functions such as seat massage and seat heating. In addition, the vehicle 01 may further include a vehicle-mounted display 06. As shown in FIG. 12, virtual buttons of corresponding functions may be disposed on the vehicle-mounted display 06. In this way, a user may operate the seat 20 by using the vehicle-mounted display 06, to control functions related to the seat 20.

Descriptions are provided above by using an example of a use scenario in which the connector 100 provided in embodiments of this application is used in the vehicle-mounted seat. In addition, the connector 100 provided in embodiments of this application may alternatively be used as a connector of another device. For example, the connector 100 may be used as a connector of an electronic device like a mobile phone, a tablet computer, or a notebook computer, or may be used as a connector of an electrical device like an air conditioner, a television, or a purifier. A specific structural principle of the connector 100 is the same as that in the foregoing embodiment. Details are not described herein again. A use scenario of the connector 100 is not specifically limited in embodiments of this application.

For example, the electronic device is a mobile phone. The connector receptacle 110 may be a charging port on the mobile phone, and the connector plug 120 may be a charging plug for charging the mobile phone. For example, the electrical device is an air conditioner. The connector receptacle 110 may be an indoor power socket, and the connector plug 120 may be a power plug of the air conditioner. Other electronic devices and electrical devices are similar to this, and details are not described herein again.

For example, as shown in FIG. 13, the connector plug 120 may further include a support 160. The first conductive portion 1212 and the second conductive portion 1222 are disposed on two sides of the support 160, and are connected to the support 160. Certainly, one conductive portion may be disposed on only one side of the support 160. This is not specifically limited in embodiments of this application.

When the connector 100 provided in embodiments of this application is used in an electronic device or an electrical device, the support 160 may support the connector plug 120, to prevent deformation and damage of the connector plug 120 during connection. In addition, the support 160 may further position and fasten the first conductive portion 1212 and the second conductive portion 1222 in a thickness direction, so that the two sides of the connector plug 120 are pressed tightly in the connector receptacle 110. Optionally, the support 160 may be made of plastic. A specific material of the support 160 is not specifically limited in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A connector receptacle, comprising:
a connector receptacle body, wherein a first jack is disposed in the connector receptacle body, and the first jack has a first hole wall; and
a conductive member, wherein the conductive member is located in the first jack and is connected to the first hole wall; and
the conductive member has at least two first contact portions, and the first contact portions protrude in a direction away from the first hole wall.

2. The connector receptacle according to claim 1, wherein the connector receptacle comprises at least two conductive members, the at least two conductive members comprise a first conductive member and a second conductive member that are spaced apart, and the first conductive member and the second conductive member are insulated from each other.

3. The connector receptacle according to claim 1 or 2, wherein the at least two first contact portions comprise a first upper contact portion and a first lower contact portion; and
in an extension direction of the first jack, the first upper contact portion and the first lower contact portion are spaced apart, the first upper contact portion is closer to an opening of the first jack than the first lower contact portion, and a bulging height of the first upper contact portion is less than a bulging height of the first lower contact portion.

4. The connector receptacle according to claim 3, wherein the at least two first contact portions further comprise a first middle contact portion located between the first upper contact portion and the first lower contact portion; and
bulging heights of the first upper contact portion, first middle contact portion, and first lower contact portion are sequentially increased in the extension direction of the first jack.

5. The connector receptacle according to any one of claims 1 to 4, wherein the conductive member is a first metal spring plate, and the first metal spring plate comprises a first upper flat portion, at least two first bulging portions, and a first lower flat portion that are sequentially connected; and
at least one of the first upper flat portion and the first lower flat portion is connected to the first hole wall, and the first bulging portions bulge in the direction away from the first hole wall to form the first contact portions.

6. The connector receptacle according to claim 5, wherein a first installation groove is disposed in the first hole wall, the first upper flat portion and the first lower flat portion are located in the first installation groove, and at least a part of the first bulging portion extends out of the first installation groove; and
the first upper flat portion is close to the opening of the first jack and is connected to the first installation groove, and the first lower flat portion is away from the opening of the first jack and is a free end.

7. The connector receptacle according to any one of claims 1 to 6, wherein a part that is of the first hole wall and that is connected to the conductive member is a plane.

8. A connector, comprising:
the connector receptacle according to any one of claims 1 to 7; and
a connector plug, connected to the connector receptacle, wherein
the connector plug is located in the first jack, and abuts against and is electrically connected to the at least two first contact portions of the conductive member in the connector receptacle.

9. The connector according to claim 8, wherein the connector plug comprises:
a connector plug body; and
a conductive portion, wherein the conductive portion is disposed on the connector plug body and is connected to the connector plug body; and
a surface that is of the conductive portion and that is away from the connector plug body abuts against and is electrically connected to the at least two first contact portions, and the surface that is of the conductive portion and that is away from the connector plug body is a plane.

10. The connector according to claim 9, wherein the connector receptacle comprises the at least two conductive members, and the at least two conductive members comprise the first conductive member and the second conductive member that are insulated from each other;
the connector plug comprises at least two conductive portions, and the at least two conductive portions comprise a first conductive portion and a second conductive portion that are insulated from each other; and
the first conductive portion abuts against and is electrically connected to the at least two first contact portions of the first conductive member, and the second conductive portion abuts against and is electrically connected to the at least two first contact portions of the second conductive member.

11. The connector according to claim 10, wherein the first conductive portion and the second conductive portion are metal conductive plates, two first connection grooves that are isolated from each other are disposed on the connector plug body, and the first conductive portion and the second conductive portion are respectively installed in the two first connection grooves.

12. The connector according to any one of claims 8 to 11, wherein the connector plug further comprises a support; and
the support is connected to the connector plug, and the support is located on a side that is of the connector plug and that is away from the conductive member in the connector receptacle.

13. A connector plug, wherein the connector plug comprises:
a connector plug body; and
a conductive portion, wherein the conductive portion is disposed on the connector plug body and is connected to the connector plug body; and
the conductive portion has at least two second contact portions, and the second contact portions protrude in a direction away from the connector plug body.

14. The connector plug according to claim 13, wherein the connector plug comprises at least two conductive portions, the at least two conductive portions comprise a first conductive portion and a second conductive portion that are spaced apart, and the first conductive portion and the second conductive portion are insulated from each other.

15. The connector plug according to claim 13 or 14, wherein the at least two second contact portions comprise a second upper contact portion and a second lower contact portion; and
in an insertion direction of the connector plug body, the second upper contact portion and the second lower contact portion are spaced apart, the second upper contact portion is farther away from an end portion of the connector plug body than the second lower contact portion, and a bulging height of the second upper contact portion is greater than a bulging height of the second lower contact portion.

16. The connector plug according to claim 15, wherein the at least two second contact portions further comprise a second middle contact portion located between the second upper contact portion and the second lower contact portion; and
bulging heights of the second upper contact portion, second middle contact portion, and second lower contact portion are sequentially decreased in the insertion direction of the connector plug body.

17. The connector plug according to any one of claims 13 to 16, wherein the conductive portion is a second metal spring plate, and the second metal spring plate comprises a second upper flat portion, at least two second bulging portions, and a second lower flat portion that are sequentially connected; and
at least one of the second upper flat portion and the second lower flat portion is connected to the connector plug body, and the second bulging portions bulge in the direction away from the connector plug body to form the second contact portions.

18. The connector plug according to claim 17, wherein a second installation groove is disposed on the connector plug body, the second upper flat portion and the second lower flat portion are located in the second installation groove, and at least a part of the second bulging portion extends out of the second installation groove; and
the second upper flat portion is far away from the end portion of the connector plug body and is a free end, and the second lower flat portion is close to the end portion of the connector plug body and is connected to the second installation groove.

19. The connector plug according to any one of claims 13 to 18, wherein a part that is of the connector plug body and that is connected to the conductive portion is a plane.

20. A connector, comprising:
a connector receptacle; and
the connector plug according to any one of claims 13 to 19, inserted into the connector receptacle, wherein
the connector plug is located in the connector receptacle, and the connector receptacle abuts against and is electrically connected to the at least two second contact portions of the conductive portion of the connector plug.

21. The connector according to claim 20, wherein the connector receptacle comprises:
a connector receptacle body, wherein a second jack is disposed in the connector receptacle body, and the second jack has a second hole wall; and
a conductive member, wherein the conductive member is located in the second jack and is connected to the second hole wall; and
a surface that is of the conductive member and that is away from the second hole wall abuts against and is electrically connected to the at least two second contact portions, and the surface that is of the conductive member and that is away from the second hole wall is a plane.

22. The connector according to claim 21, wherein the connector plug comprises the at least two conductive portions, and the at least two conductive portions comprise the first conductive portion and the second conductive portion that are insulated from each other;
the connector receptacle comprises at least two conductive members, and the at least two conductive members comprise a first conductive member and the second conductive member that are insulated from each other; and
the first conductive member abuts against and is electrically connected to the at least two second contact portions of the first conductive portion, and the second conductive member abuts against and is electrically connected to the at least two second contact portions of the second conductive portion.

23. The connector according to claim 22, wherein the first conductive member and the second conductive member are metal conductive plates, two second connection grooves that are isolated from each other are disposed on the second hole wall, and the first conductive member and the second conductive member are respectively installed in the two second connection grooves.

24. A connector, comprising:
the connector receptacle according to any one of claims 1 to 7, comprising the conductive member disposed in the connector receptacle, wherein the conductive member has the at least two first contact portions, and the first contact portions protrude in the direction away from the first hole wall; and
the connector plug according to any one of claims 13 to 19, comprising the conductive portion disposed on the connector plug, wherein the conductive portion has the at least two second contact portions, and the second contact portions protrude in the direction away from the connector plug body; and
the connector plug is inserted into the connector receptacle, the conductive member abuts against and is electrically connected to the at least two second contact portions of the conductive portion, and the conductive portion abuts against and is electrically connected to the at least two first contact portions of the conductive member.

25. A seat, comprising:
the connector according to any one of claims 8 to 12, or the connector according to any one of claims 20 to 23, or the connector according to claim 24;
a backrest, having installation holes, wherein the connector receptacle of the connector is installed in the installation holes; and
a headrest, comprising insertion rods, wherein the connector plug of the connector is connected to the insertion rods; and
the headrest is inserted into the backrest via the insertion rods.

26. The seat according to claim 25, wherein the headrest further comprises a conducting wire, and the conducting wire is installed in the insertion rod; and
an end of the conducting wire is electrically connected to the conductive portion of the connector plug on the insertion rod.

27. The seat according to claim 26, wherein the connector plug comprises the first conductive portion and the second conductive portion that are insulated from each other, and the first conductive portion and the second conductive portion are spaced apart and connected on an outer side wall of the insertion rod; and
the conducting wire comprises a first conducting wire and a second conducting wire, the first conducting wire and the second conducting wire are installed in the insertion rods, the first conducting wire is electrically connected to the first conductive portion, and the second conducting wire is electrically connected to the second conductive portion.

28. A vehicle, comprising:
a vehicle body; and
at least one seat according to any one of claims 25 to 27, wherein the seat is disposed in the vehicle body.
